# EUROPÄISCHE PATENTSCHRIFT

(11) **EP 2 884 119 B1**
(45) Veröffentlichungstag und Bekanntmachung des Hinweises auf die Patenterteilung: **25.04.2018**
(21) Anmeldenummer: 14198033.4
(22) Anmeldetag: 15.12.2014
(51) Int. Cl.: B60R 13/02

(54) **Befestigungssystem**
Fastening system
Système de fixation

(30) Priorität: 13.12.2013 AT 4422013 U
(43) Veröffentlichungstag der Anmeldung: 17.06.2015
(73) Patentinhaber: ULTIMATE Europe Transportation Equipment GmbH, 3300 Amstetten (AT); Teufl, Manfred, 3332 Rosenau (AT)
(72) Erfinder: Teufl, Manfred, 3332 Rosenau (AT)
(74) Vertreter: KLIMENT & HENHAPEL

(56) Entgegenhaltungen:
- EP-A1- 0 780 268
- EP-A1- 2 657 545
- DE-A1-102009 009 883
- DE-U1- 9 201 258
- US-A- 4 867 599

## Beschreibung

### GEBIET DER ERFINDUNG

Die Erfindung betrifft ein System zur Befestigung eines ersten oder eines ersten und eines zweiten Innenraumverkleidungselementes an einem in einem Innenraumbereich, vorzugsweise eines Schienenfahrzeuges, angeordneten Verkleidungsträger. Darüber hinaus umfasst die vorliegende Erfindung ein Verfahren zum Lösen eines erfindungsgemäßen Befestigungssystems.

### STAND DER TECHNIK

Derzeit auf dem freien Markt erhältliche Systeme zur Befestigung von Verkleidungselementen, wie sie beispielsweise zur Abdeckung von Innenflächen von Teilen einer Karosseriestruktur verwendet werden, sind mit den zugehörigen Verbindungselementen bzw. Befestigungsmitteln aufgrund der immer stärker werdenden Komplexität immer schwerer zu verschrauben bzw. wieder zu lösen, wodurch hohe Kosten bei der Montage als auch bei der Fertigung entstehen.

Als wesentliches Problem ist hierbei die Lösbarkeit der zumeist zusammengeschraubten bzw. -genieteten Innenraumverkleidungselemente zu betrachten, da speziell im Innenraumverkleidungsbereich die Forderung besteht, dass keine Verbindungs- bzw. Befestigungsmittel im frei sichtbaren Bereich liegen dürfen. Dies hat zur Folge, dass viele Verkleidungsteile bzw. Bauteile nur mit Spezialwerkzeugen unter äußerst schwierigen Bedingungen ein- bzw. ausgebaut werden können.

Eine alternative Möglichkeit zur Anbindung eines Anbauteils an einem Trägerteil offenbart die DE 10 2009 009883 A1. Dabei sind zwei an der Rückseite des Anbauteils ausgebildete Rasthaken mit einer Öffnung des Trägerelements verrastet. Weiters sind die Rasthaken durch Einschieben eines Sicherungselements gesichert, um ein Lösen der Verrastung zu verhindern.

Die EP 0 780 268 A1 zeigt ein System zum Befestigen eines zweiteiligen Aufbaus auf einer Unterlage, wobei das erste Teil Einsteckzungen aufweist, die mit der Unterlage verrasten, und das zweite Teil Einsteckstege aufweist, die in die Einsteckzungen gesteckt sind, um ein Lösen der Verrastung zu verhindern.

### AUFGABENSTELLUNG

Es liegt somit der vorliegenden Erfindung die Aufgabe zu Grunde, ein Befestigungssystem mit Befestigungsmitteln zur Fixierung zumindest eines Innenraumverkleidungselementes an einem Verkleidungsträger zu schaffen, bei welchem die Befestigungsmittel der Innenraumverkleidungselemente leicht zu lösen sind und nicht im frei sichtbaren Bereich liegen bzw. gegebenenfalls leicht mittels Abdeckelementen, welche an das Innenraumverkleidungselement angepasst sind, abgedeckt werden können. Darüber hinaus sollte das Befestigungssystem aus wenigen Komponenten bestehen, einfach in der Fertigung bzw. im Aufbau sein und somit schnell befestigt bzw. wieder gelöst werden können.

### DARSTELLUNG DER ERFINDUNG

Die Erfindung betrifft ein System zur Befestigung eines ersten oder eines ersten und eines zweiten Innenraumverkleidungselementes an einem in einem Innenraumbereich, vorzugsweise eines Schienenfahrzeuges, angeordneten Verkleidungsträger, das System umfassend:
- ein an dem ersten Innenraumverkleidungselement angeordnetes Fixierelement, welches zwei Rastabschnitte mit jeweils einer Außenfläche aufweist, wobei das Fixierelement zwei stabförmige Abschnitte umfasst, die zwischen sich ein Aufnahmevolumen ausbilden und jeder stabförmige Abschnitt mit einem der Rastabschnitte versehen ist,
- mindestens ein Halteelement mit einer eine kleinste lichte Breite definierenden Halteaufnahme zur Verrastung des Fixierelementes mittels dessen Rastabschnitten,
- einen Fixierbolzen mit einem Fixierkopf, welcher Fixierkopf entlang einer Fixierrichtung in eine erste Position und entlang einer Entnahmerichtung von der ersten Position in eine zweite Position bewegbar ist,
- wobei in der ersten Position der Fixierkopf im Aufnahmevolumen aufgenommen und verrastet ist, wodurch ein Zusammendrücken der Außenflächen der beiden Rastabschnitte auf einen Abstand, der kleiner ist als die kleinste lichte Breite und das Entfernen des Fixierelementes aus der Halteaufnahme ermöglicht, verhindert wird,
- und in der zweiten Position der Fixierkopf außerhalb des Aufnahmevolumens angeordnet ist, wodurch die Rastabschnitte zusammendrückbar sind, sodass der Abstand der Außenflächen der Rastabschnitte kleiner ist als die kleinste lichte Breite, um ein Ausfädeln des Fixierelementes aus der Halteaufnahme zu ermöglichen.

Das Fixierelement umfasst zwei stabförmige Abschnitte, welche zwischen sich ein Aufnahmevolumen ausbilden und in der ersten Position der Fixierbolzen zumindest abschnittsweise in dem Aufnahmevolumen angeordnet ist.

Hingegen ist in der zweiten Position jener Abschnitt des Fixierbolzens, welcher in der ersten Position innerhalb des Aufnahmevolumens angeordnet ist, in der zweiten Position außerhalb des Aufnahmevolumens angeordnet, wobei sich die zweite Position entweder zwischen dem Aufnahmevolumen und dem zweiten Innenraumverkleidungselement befindet oder, falls kein zweites Innenraumverkleidungselement vorgesehen ist, auf der zur Außenkontur des ersten Innenraumverkleidungselementes gegenüberliegenden Seite des Aufnahmevolumens.

Der in das Aufnahmevolumen einführbare Fixierbolzen ragt in der ersten Position und/oder in der zweiten Position nicht aus dem Fixierelement bzw. mit anderen Worten über die Außenkontur des ersten Innenraumverkleidungselementes hinaus, wobei vorzugsweise der Fixierbolzen zum Aufnahmevolumen gerichtet einen Fixierkopf aufweist. Dieser Fixierkopf gewährleistet eine wesentlich robustere Fixierung des Fixierbolzens in dem durch das Fixierelement des ersten Innenraumverkleidungselementes gebildeten Aufnahmevolumen, da dieses zur Aufnahme und Verrastung des Fixierkopfes ausgebildet sein kann.

Wesentlich dabei ist, dass jeder stabförmige Abschnitt, wobei das Fixierelement zwei stabförmige Abschnitte umfasst, mit dem zumindest einen Rastabschnitt versehen ist, wobei das Fixierelement zumindest im Bereich der Rastabschnitte elastisch ausgebildet sein kann, wodurch ein besonders einfaches und damit mit wenig Kraftaufwand verbundenes Bewegen des zumindest einen Rastabschnittes des Fixierelementes des ersten Innenraumverkleidungselementes in die Halteaufnahme gegeben ist.

Die eingangs gestellte Aufgabe wird erfindungsgemäß dadurch gelöst, dass die Entnahmerichtung der Fixierrichtung entspricht.

Dadurch ist die vorliegende Erfindung für die sichere Montage beliebig gestalteter Innenraumverkleidungselemente für verschiedenste Anwendungsbereiche, beispielsweise im Waggonbau, geeignet, wobei der Fixierbolzen als Befestigungsmittel im nicht sichtbaren Bereich sowie ohne Spezialwerkzeug lösbar und befestigbar angeordnet ist, wodurch das Fixierelement allein durch Bewegen des Fixierbolzens zwischen den beiden Positionen gelöst oder fixiert wird.

Bevorzugter Weise ist der Fixierbolzen im Aufnahmevolumen des Fixierelementes des ersten Innenraumverkleidungselementes längsverschiebbar angeordnet, wobei der Fixierbolzen gegebenenfalls mittels einer durchgängigen Längsführung im ersten Innenraumverkleidungselement von außen über deren Außenkontur zugänglich angeordnet ist. Dabei verläuft die durchgängige Längsführung, in welcher der Fixierbolzen teilweise angeordnet ist, in Richtung des durch das Fixierelement des ersten Innenraumverkleidungselementes gebildeten Aufnahmevolumens. Dabei können die erfindungsgemäß eingesetzten Rastabschnitte der Fixierelemente beispielsweise haken- oder halbkreisförmig ausgebildet sein, wobei die zugehörige Halteaufnahme dementsprechend rechteck- oder kreisförmig ausgebildet ist, wodurch eine besonders gute Fixierung ermöglicht wird.

Dahingehend weist die Halteaufnahme eine kleinste lichte Breite auf, welche kleiner als ein maximaler äußerer Abstand der Außenflächen der beiden Rastabschnitte des ersten Innenraumverkleidungselementes im verrasteten Zustand ist.

In einer ersten erfindungsgemäßen Ausführungsform ist das Halteelement für das erste Innenraumverkleidungselement am Verkleidungsträger angeordnet, während in einer zweiten erfindungsgemäßen Ausführungsform das Halteelement an dem zweiten Innenraumverkleidungselement angeordnet ist.

In der ersten erfindungsgemäßen Ausführungsform umfasst das Halteelement zwei im Wesentlichen in einem Abstand zueinander verlaufende Trägerelemente und die die kleinste lichte Breite definierende Halteaufnahme wird durch den Zwischenraum zwischen den beiden Trägerelementen gebildet.

In der zweiten erfindungsgemäßen Ausführungsform weist das zweite Innenraumverkleidungselement ein weiteres Fixierelement mit zwei Rastabschnitten auf, welche zwischen sich die Halteaufnahme definieren, wobei im verrasteten Zustand der maximale Abstand der Außenflächen der beiden Rastabschnitte des ersten Innenraumverkleidungselementes größer als die kleinste lichte Breite der Halteaufnahme ist. Hierbei sind die beiden Rastabschnitte des weiteren Fixierelementes in einer am Verkleidungsträger angeordneten Rastbasis verrastbar, wodurch auch die kleinste lichte Breite der Halteaufnahme definiert wird.

Die Montage der Innenraumverkleidungselemente erfolgt somit vereinfacht ausgedrückt dadurch, dass ein Halteelement für das erste Innenraumverkleidungselement an dem zweiten Innenraumverkleidungselement angeordnet ist, welches ein weiteres Fixierelement mit zwei Rastabschnitte aufweist, welche zwischen sich die Haltaufnahme definieren. Diese Halteaufnahme weist im Endabschnitt des Fixierelementes eine kleinste lichte Breite auf, durch welche der Zwischenraum zwischen den beiden Rastabschnitten des Fixierelementes gebildet wird. Dabei ist der maximale Abstand der Außenflächen der beiden Rastabschnitte des ersten Innenraumverkleidungselementes im verrasteten Zustand größer, als die die Halteaufnahme bildende maximale kleinste lichte Breite.

Ein Herausgleiten der beiden Rastabschnitte des Fixierelementes des ersten Innenraumverkleidungselementes aus der Halteaufnahme des zweiten Innenraumverkleidungselementes wird durch eine Arretierung mittels des Fixierbolzens verhindert.

In einer weiteren bevorzugten erfindungsgemäßen Ausführungsform weisen die Innenraumverkleidungselemente zur Sicherstellung einer höheren

Verwindesteifigkeit ineinander führbare Führungselemente bzw. Führungsstäbe und Führungselemente auf, welche gegebenenfalls durch zugehörige im Verkleidungsträger angeordnete Bohrungen geführt sind, wobei zusätzlich am Verkleidungsträger zumindest eine Führungsnase angeordnet sein kann, welche gegebenenfalls in zwei am ersten Innenraumverkleidungselement angeordnete Führungsnasen einsteckbar ist.

Die Erfindung betrifft auch ein Verfahren zum Lösen eines ein Fixierelement umfassenden ersten Innenraumverkleidungselements aus einem befestigten Zustand, wobei das erste

Innenraumverkleidungselement durch Verrastung des Fixierelements mit einer Halteaufnahme eines Halteelements an einem in einem Innenraumbereich, vorzugsweise in einem Innenraumbereich eines Schienenfahrzeuges, angeordneten Verkleidungsträger befestigt ist, indem ein Fixierbolzen entlang einer Fixierrichtung in das Fixierelement eingeschoben wurde, wobei das Lösen der Verrastung im befestigten Zustand mittels des sich in einer ersten Position befindlichen Fixierbolzens verhindert wird. Die eingangs beschriebene Aufgabenstellung wird erfindungsgemäß dadurch gelöst, dass zum Lösen des ersten Innenraumverkleidungselements folgender Verfahrensschritt durchgeführt wird:
- Verschieben des Fixierbolzens entlang einer der Fixierrichtung entsprechenden Entnahmerichtung, bis die Verrastung des ersten Innenraumverkleidungselements in einer zweiten Position des Fixierbolzens gelöst werden kann.

Hierbei ist zu beachten, dass in einer erfindungsgemäßen Ausführungsform der Fixierbolzen, vorzugsweise der Fixierkopf, aus dem Aufnahmevolumen des ersten Innenraumverkleidungselementes durch Verschieben derselben durch das Aufnahmevolumen in Richtung des zweiten Innenraumverkleidungselementes entfernt wird.

### KURZE BESCHREIBUNG DER FIGUREN

Im Folgenden wird die Erfindung unter Bezugnahme auf die beigefügten Figuren näher beschrieben, wobei Fig. 3 bis 11 eine erste erfindungsgemäße Ausführungsform und Fig. 12 bis 18 eine zweite erfindungsgemäße Ausführungsform veranschaulichen. Im Detail zeigt:
- Fig. 1: eine axonometrische Ansicht einer beispielhaften Verkleidung in einem Schienenfahrzeug mit einem erfindungsgemäßen Befestigungssystem in Kombination mit anderen Innenraumverkleidungselementen;
- Fig. 2: eine Schnittdarstellung eines Fixierelementes eines ersten Innenraumverkleidungselementes, welches einen ersten und einen zweiten stabförmigen Abschnitt umfasst;
- Fig. 3: eine axonometrische Ansicht eines Verkleidungsträgers;
- Fig. 4: eine axonometrische Ansicht eines Verkleidungsträgers mit einem Innenraumverkleidungselement in Explosionsdarstellung;
- Fig. 5: eine axonometrische Ansicht eines Verkleidungsträgers, in welchem ein Innenraumverkleidungselement eingesetzt ist und ein Montagemittel zur Befestigung des Innenraumverkleidungselementes in Explosionsdarstellung angeordnet ist;
- Fig. 6: eine axonometrische Ansicht eines Verkleidungsträgers, in welchem ein mittels eines Montagemittels befestigtes Innenraumverkleidungselement eingesetzt ist;
- Fig. 7: eine axonometrische Ansicht eines Verkleidungsträgers, in welchem ein Innenraumverkleidungselement eingesetzt ist und ein weiteres Innenraumverkleidungselement in Explosionsdarstellung angeordnet ist;
- Fig. 8: eine axonometrische Ansicht eines Verkleidungsträgers, in welchem beide Innenraumverkleidungselemente eingesetzt sind und ein Fixierbolzen zur Fixierung eines Innenraumverkleidungselementes lose geführt ist (vor dem Positionieren des Fixierbolzens 5a in eine 1. Position);
- Fig. 9: eine axonometrische Ansicht eines Verkleidungsträgers, in welchem beide Innenraumverkleidungselemente eingesetzt sind und ein Fixierbolzen zur Fixierung eines Innenraumverkleidungselementes verrastet ist (1. Position des Fixierbolzens 5a);
- Fig. 10: eine Schnittdarstellung des Verkleidungsträgers mit eingesetzten Innenraumverkleidungselementen aus Fig. 9 (1. Position des Fixierbolzens 5a);
- Fig. 11: eine axonometrische Ansicht eines Verkleidungsträgers, in welchem beide Innenraumverkleidungselemente eingesetzt sind und ein Fixierbolzen sich in einer zweiten Position zum Lösen der Befestigung eines Innenraumverkleidungselementes befindet;
- Fig. 12: eine axonometrische Ansicht eines Verkleidungsträgers;
- Fig. 13: eine axonometrische Ansicht eines Verkleidungsträgers mit einem Innenraumverkleidungselement in Explosionsdarstellung;
- Fig. 14: eine axonometrische Ansicht eines Verkleidungsträgers, in welchem ein Innenraumverkleidungselement eingesetzt ist, und eines weiteren Innenraumverkleidungselementes in Explosionsdarstellung;
- Fig. 15: eine axonometrische Ansicht eines Verkleidungsträgers, in welchem beide Innenraumverkleidungselemente eingesetzt sind, wobei ein Fixierbolzen zur Fixierung beider Innenraumverkleidungselemente lose geführt ist;
- Fig. 16: eine axonometrische Ansicht eines Verkleidungsträgers, in welchem beide Innenraumverkleidungselemente eingesetzt sind und ein Fixierbolzen zur Fixierung beider Innenraumverkleidungselemente verrastet ist (1. Position des Fixierbolzens 5a);
- Fig. 17: eine Schnittdarstellung des Verkleidungsträgers aus Fig. 16 (1. Position des Fixierbolzens 5a); und
- Fig. 18: eine axonometrische Ansicht eines Verkleidungsträgers, in welchem beide Innenraumverkleidungselemente eingesetzt sind, wobei ein Fixierbolzen sich in einer zweiten Position zum Lösen der Befestigung beider Innenraumverkleidungselemente befindet.
- Fig. 19: eine Detailansicht des Verkleidungsträgers mit einem eingesetzten ersten Innenraumverkleidungselement aus Fig. 10 (1. Position des Fixierbolzens 5a);
- Fig. 20: eine Detailansicht des Verkleidungsträgers mit einem eingesetzten ersten Innenraumverkleidungselement aus Fig. 11, wobei sich ein Fixierbolzen in einer zweiten Position zum Lösen der Befestigung eines Innenraumverkleidungselementes befindet;

### WEGE ZUR AUSFÜHRUNG DER ERFINDUNG

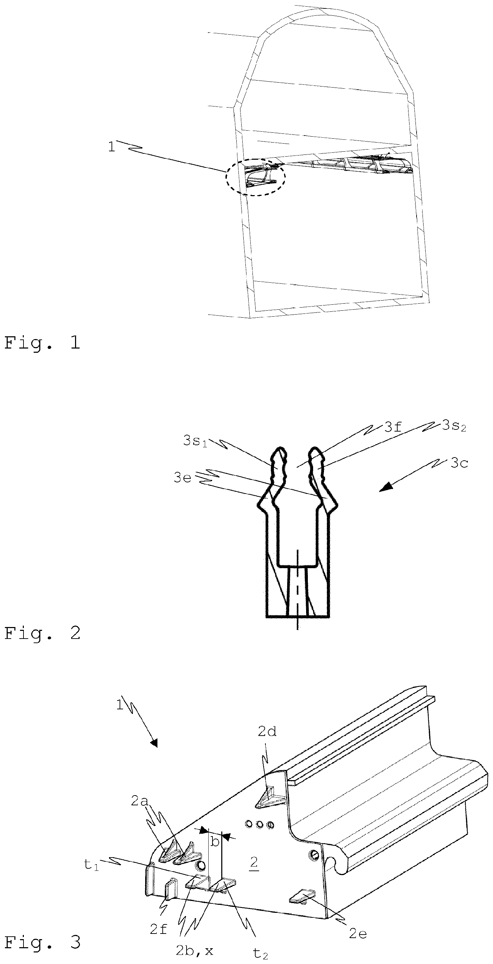

Fig. 1 zeigt eine beispielhafte Verkleidung mit einem erfindungsgemäßen Befestigungssystem 1, welches in einem Schienenfahrzeug in Kombination mit anderen Verkleidungselementen angeordnet ist.

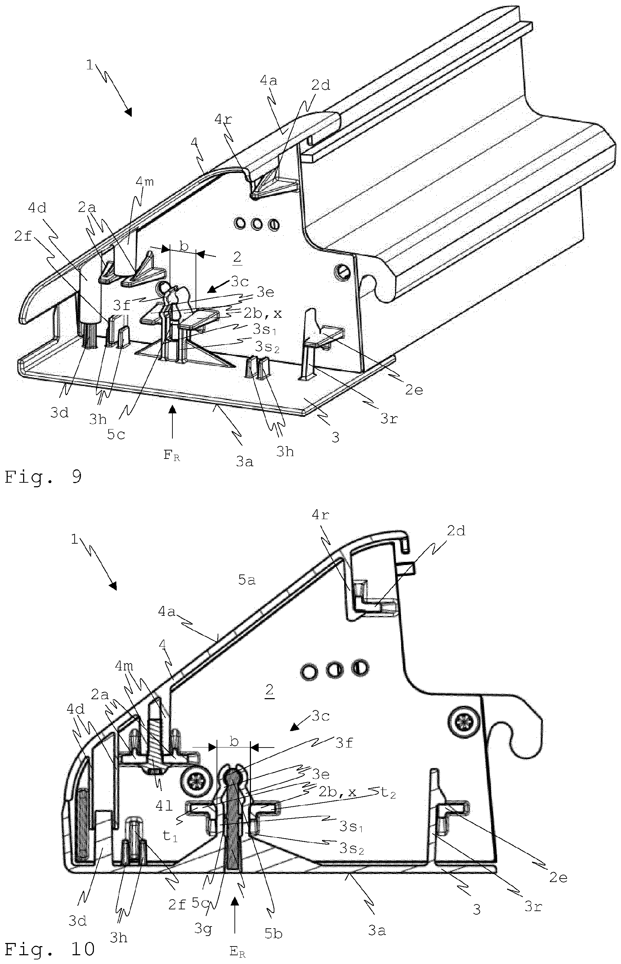

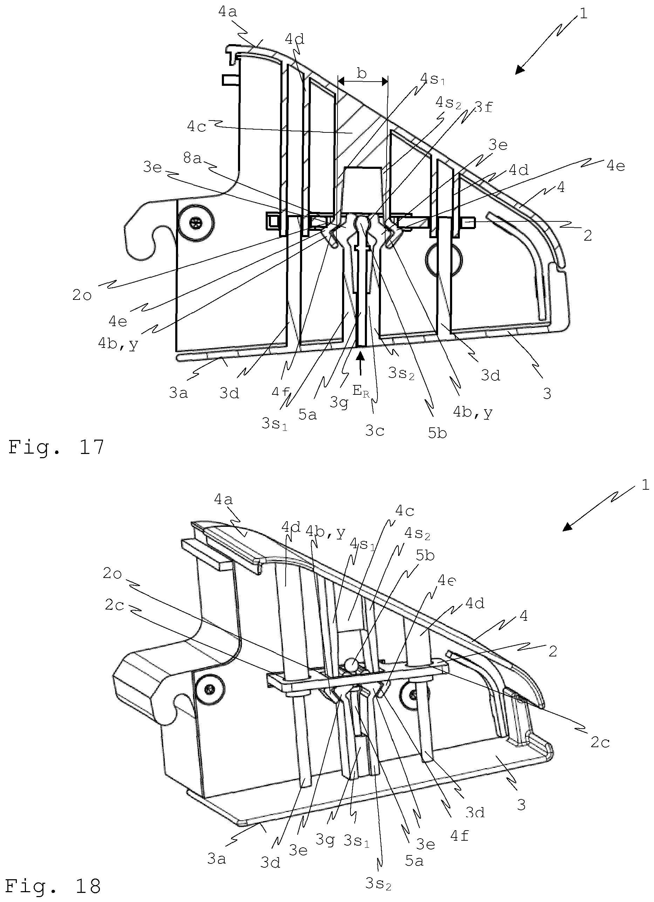

Fig. 2 zeigt eine Schnittdarstellung eines Fixierelementes 3c mit einem ersten und einem zweiten stabförmigen Abschnitt 3s₁,3s₂ eines ersten Innenraumverkleidungselementes 3, wobei an den stabförmigen Abschnitten 3s₁,3s₂ elastisch ausgebildete Rastabschnitte 3e angeordnet sind. Darüber hinaus bildet das Fixierelement 3c zwischen den beiden stabförmigen Abschnitten 3s₁,3s₂ ein Aufnahmevolumen 3f Im Detail wird anhand von Fig. 10 der Aufbau und die Wirkungsweise eines ersten erfindungsgemäßen Befestigungssystems 1 zur Befestigung eines ersten Innenraumverkleidungselementes 3 an einem Verkleidungsträger 2 und anhand von Fig. 17 ein zweites erfindungsgemäßes Befestigungssystem 1 zur Befestigung eines ersten und eines zweiten Innenraumverkleidungselementes 3,4 an einem Verkleidungsträger 2 im Zusammenbau näher erläutert.

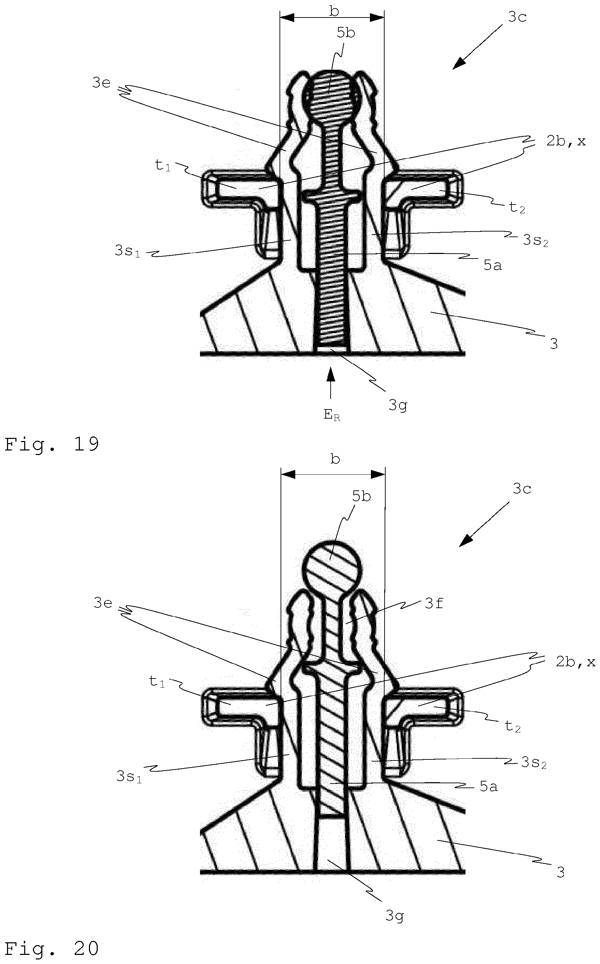

Dabei weist in der ersten erfindungsgemäßen Ausführungsform gemäß Fig. 10 das erste Innenraumverkleidungselement 3 ein einer Außenkontur 3a gegenüberliegendes, vom Innenraumverkleidungselement 3 winkelig abstehendes Fixierelement 3c auf, welches im vorliegenden Ausführungsbeispiel aus zwei stabförmigen Abschnitten 3s₁,3s₂ besteht, welche beispielsweise mit Hilfe eines Steges teilweise miteinander verbunden sind, wobei auch eine vereinfachte Ausführungsform, in der ein Fixierelement 3c nur einen stabförmig ausgebildeten Abschnitt umfasst, möglich ist, siehe auch Fig. 19. Die beiden stabförmigen Abschnitte 3s₁,3s₂ des Fixierelementes 3c sind jeweils mit zumindest einem Rastabschnitt 3e versehen, wobei das Fixierelement 3c zumindest im Bereich der Rastabschnitte 3e elastisch, d.h. zu- und voneinander bewegbar, ausgebildet ist. Diese Rastabschnitte 3e sind in ein am Verkleidungsträger 2 angeordnetes Halteelement x bzw. deren Halteaufnahme 2b, welche durch zwei Trägerelemente t₁,t₂ gebildet wird, einfädelbar.

Die Rastabschnitte 3e sind im vorliegenden Ausführungsbeispiel hakenförmig und die Halteaufnahme 2b am Verkleidungsträger 2 rechteckförmig ausgebildet, wobei die Rastabschnitte 3e auch halbkreisförmig und die Halteaufnahme 2b dementsprechend kreisförmig ausgebildet sein können, sodass sie Außenflächen mit Außenflächenabschnitten aufweisen, die zueinander einen unterschiedlichen Abstand aufweisen. Die beiden stabförmigen Abschnitte 3s₁,3s₂ bilden zwischen sich ein Aufnahmevolumen 3f aus. Dabei ist ein maximaler Abstand a der Außenflächen der beiden Rastabschnitte 3e des ersten Innenraumverkleidungselementes 3 im verrasteten bzw. eingefädelten Zustand größer als eine kleinste lichte Breite b der Halteaufnahme 2b am Verkleidungsträger 2, wobei die Halteaufnahme 2b durch den Zwischenraum zwischen zwei Trägerelementen t₁,t₂ gebildet wird. In dieser Konfiguration ist es ohne elastische Verformbarkeit der stabförmigen Abschnitte 3s₁,3s₂ im Bereich der Rastabschnitte 3e nicht möglich, das Fixierelement 3c in die Halteaufnahme 2b einzufädeln oder aus der Halteaufnahme 2b auszufädeln.

Das zweite Innenraumverkleidungselement 4 weist eine gegenüber ihrer Außenkontur 4a liegende, vom zweiten Innenraumverkleidungselement 4 abstehende Halterung 4m und ein davon beabstandetes stabförmig ausgebildetes Führungselement 4d auf, wobei im zusammengefügten Zustand mit dem Verkleidungsträger 2 die Halterung 4m auf einer am Verkleidungsträger 2 angeordneten Halterung 2a aufliegt und ein am ersten Innenraumverkleidungselement 3 angeordneter Führungsstab 3d in das am zweiten Innenraumverkleidungselement 4 angeordnete Führungselement 4d eingeführt ist. Dabei ist die Halterung 4m mit der Halterung 2a am Verkleidungsträger 2 mittels eines Montagemittels 41, beispielsweise einer Schraube, befestigt. Zusätzlich ist am zweiten Innenraumverkleidungselement 4 zumindest ein Rasthaken 4r angeordnet, welcher in ein erstes Einrasthakenelement 2d am Verkleidungsträger 2 eingreift. Darüber hinaus können am Verkleidungsträger 2 Führungsnasen 2f angeordnet sein, welche in am ersten Innenraumverkleidungselement 3 angeordnete Führungsnasen 3h eingreifen. Ebenso kann am ersten Innenraumverkleidungselement 3 zumindest ein Rasthaken 3r angeordnet sein, welcher in ein zweites Einrasthakenelement 2e am Verkleidungsträger 2 eingreift. Hierbei sind unterschiedlichste Kombinationen ohne erfinderisches Zutun für den Fachmann umsetzbar. Das durch die zueinander weisenden Innenflächen der beiden stabförmigen Abschnitte 3s₁,3s₂ des Fixierelementes 3c gebildete Aufnahmevolumen 3f dient zur Aufnahme eines Fixierbolzens 5a bzw. eines Fixierkopfes 5b des Fixierbolzens 5a, wobei der Fixierkopf 5b im eingebauten Zustand des Fixierbolzens 5a zum zweiten Innenraumverkleidungselement 4 gerichtet ist.

Durch den im Aufnahmevolumen 3f positionierbaren Fixierbolzen 5a bzw. Fixierkopf 5b ist im montierten Zustand des Befestigungssystems 1 ein Zusammendrücken der Rastabschnitte 3e des Fixierelementes 3c des ersten Innenraumverkleidungselementes 3 je nach geometrischen Verhältnissen zwar grundsätzlich nicht ausgeschlossen, jedenfalls aber nur soweit möglich, als die Rastabschnitte 3e des Fixierelementes 3c des ersten Innenraumverkleidungselementes 3 aus der Halteaufnahme 2b am Verkleidungsträger 2 nicht ausgefädelt werden können.

Es muss somit im Montagezustand der maximale Abstand a der Außenflächen der Rastabschnitte 3e stets größer sein, als die kleinste lichte Breite b der im vorliegenden Fall rechteckförmigen Halteaufnahme 2b am Verkleidungsträger 2.

Dabei ist der Fixierbolzen 5a zwischen den beiden stabförmigen Abschnitten 3s₁,3s₂ des Fixierelementes 3c des ersten Innenraumverkleidungselementes 3 längsverschiebbar angeordnet und gegebenenfalls mittels einer durchgängigen Längsführung 3g im ersten Innenraumverkleidungselement 3 von außen zugänglich.

Genauer gesagt ist der Fixierbolzen 5a, vorzugsweise der Fixierkopf 5b, zumindest zwischen zwei Positionen bewegbar angeordnet:
- Erste Position: In dieser Position ist der Fixierbolzen 5a zumindest abschnittsweise in dem durch das Fixierelement 3c des ersten Innenraumverkleidungselementes 3 gebildete Aufnahmevolumen 3f positioniert, wodurch ein Zusammendrücken der zumindest einen Außenfläche des zumindest einen Rastabschnittes 3e auf einen Abstand, der kleiner ist als die kleinste lichte Breite b und das Entfernen des Fixierelementes 3c aus der Halteaufnahme 2b ermöglicht, verhindert wird.
- Zweite Position: In dieser Position ist der zumindest eine Rastabschnitt 3e des Fixierelementes 3c des ersten Innenraumverkleidungselementes 3 auf einen Abstand der zumindest einen Außenfläche zusammendrückbar, welche kleiner ist als die kleinste lichte Breite b und ein Ausfädeln des Fixierelementes 3c aus der Halteaufnahme 2b am Verkleidungsträger 2 ermöglicht.

In der zweiten erfindungsgemäßen Ausführungsform gemäß Fig. 17 weist das zweite Innenraumverkleidungselement 4 ein einer Außenkontur 4a gegenüberliegendes, vom zweiten Innenraumverkleidungselement 4 winkelig abstehendes Fixierelement 4c auf, welches im vorliegenden Beispiel zwei stabförmige Abschnitte 4s₁,4s₂ mit jeweils einem Rastabschnitt 4e umfasst, wobei die stabförmigen Abschnitte 4s₁,4s₂ zumindest im Bereich der Rastabschnitte 4e elastisch, d.h. zu- und voneinander bewegbar, ausgebildet sind. Diese Rastabschnitte 4e des zweiten Innenraumverkleidungselementes 4 sind mit einer am Verkleidungsträger 2 angeordneten Rastbasis 2o verrastbar. Dabei bilden die Rastabschnitte 4e die Halteaufnahme 4b des Halteelementes y für das erste Innenraumverkleidungselement 3 bzw. deren Rastabschnitte 3e aus.

Die Rastabschnitte 4e des zweiten Innenraumverkleidungselementes 4 sind im vorliegenden Ausführungsbeispiel hakenförmig und die Rastbasis 2o am Verkleidungsträger 2 rechteckförmig ausgebildet, wobei die Rastabschnitte 4e auch halbkreisförmig und die Rastbasis 2o dementsprechend kreisförmig ausgebildet sein können.

Das erste Innenraumverkleidungselement 3 weist ebenfalls ein gegenüber seiner Außenkontur 3a liegendes, vom Innenraumverkleidungselement 3 abstehendes Fixierelement 3c mit zwei stabförmigen Abschnitten 3s₁,3s₂ mit jeweils einem Rastabschnitt 3e auf, wobei die beiden stabförmigen Abschnitte 3s₁,3s₂ jeweils im Bereich der Rastabschnitte 3e elastisch ausgebildet sind. Die Rastabschnitte 3e sind im montierten Zustand, wie in Fig. 17 dargestellt, in ein durch die stabförmigen Abschnitte 4s₁,4s₂ bzw. die Rastabschnitte 4e des Fixierelementes 4c gebildetes Aufnahmevolumen 4f des zweiten Innenraumverkleidungselementes 4 zumindest teilweise eingeführt.

Es sei ausdrücklich darauf hingewiesen, dass im einfachsten Fall ein vom ersten und/oder vom zweiten Innenraumverkleidungselement 3,4 der jeweiligen Außenkontur 3a,4a gegenüberliegendes und winkelig abstehendes Fixierelement 3c,4c jeweils aus nur einem stab- und/oder rohrförmigen Abschnitt bestehen kann. Dabei ist zu beachten, dass in diesem Fall nur ein Rastabschnitt 3e,4e mit einer Außenfläche vorliegt, welcher elastisch ausgebildet ist. Hierzu muss der stab- und/oder rohrförmige Abschnitt zumindest im Bereich der Rastabschnitt 3e,4e zusammendrückbar, sprich elastisch ausgebildet, sein. In diesem Fall entspricht der Durchmesser dem obig erläuterten Abstand im Falle zweier stabförmiger Abschnitte, wobei es sich im Falle des stabförmigen Abschnittes um den Außendurchmesser und im Falle des rohrförmigen Abschnittes um den Innen- oder um den Außendurchmesser handelt, gegebenenfalls können die jeweiligen Abschnitte der Fixierelemente 3c,4c der Innenraumverkleidungselemente 3,4 auch kombiniert werden. In den vorliegenden Ausführungsbeispielen weisen die Fixierelement 3c,4c jeweils zwei stabförmige Abschnitte auf.

Wie in der ersten erfindungsgemäßen Ausführungsform bilden die zueinander weisenden Innenflächen der beiden stabförmigen Abschnitte 3s₁,3s₂ des ersten Innenraumverkleidungselementes 3 ein Aufnahmevolumen 3f aus. Dieses dient zur Aufnahme des Fixierbolzens 5a bzw. des Fixierkopfes 5b des Fixierbolzens 5a, wobei der Fixierkopf 5b zum zweiten Innenraumverkleidungselement 4 gerichtet ist. Dabei ist der Fixierbolzen 5a zwischen den beiden stabförmigen Abschnitten 3s₁,3s₂ des Fixierelementes 3c des ersten Innenraumverkleidungselementes 3 längsverschiebbar angeordnet, wobei er gegebenenfalls mittels einer durchgängigen Längsführung 3g im ersten Innenraumverkleidungselement 3 von außen zugänglich ist, wodurch gemäß der ersten erfindungsgemäßen Ausführungsform der Fixierbolzen 5a bzw. der Fixierkopf 5b, zumindest zwischen zwei Positionen bewegbar angeordnet ist.

Durch den in dem Aufnahmevolumen 3f positionierten Fixierkopf 5b ist ein Zusammendrücken der Rastabschnitte 3e des Fixierelementes 3c des ersten Innenraumverkleidungselementes 3 je nach geometrischen Verhältnissen zwar grundsätzlich nicht ausgeschlossen, jedenfalls aber nur soweit möglich, dass die Rastabschnitte 3e des Fixierelementes 3c des ersten Innenraumverkleidungselementes 3 nicht aus der Halteaufnahme 4b des zweiten Innenraumverkleidungselementes 4, welches ein durch die stabförmigen Abschnitte 4s₁,4s₂ des Fixierelementes 4c gebildetes Aufnahmevolumen 4f umfasst, herausgezogen werden können.

Zur stabileren Positionierung der beiden Innenraumverkleidungselemente 3,4 weisen diese gegebenenfalls ineinander steckbare Führungsstäbe 3d und Führungselemente 4d auf, welche gegebenenfalls durch zugehörige im Verkleidungsträger 2 angeordnete Bohrungen 2c geführt sind. Diese Führungsstäbe 3d und Führungselemente 4d gewährleisten eine sichere Positionierung als auch Fixierung der Innenraumverkleidungselemente 3,4 am Verkleidungsträger 2 und sorgen für eine höhere Verwindesteifigkeit.

### FUNKTIONSWEISE DER ERFINDUNG

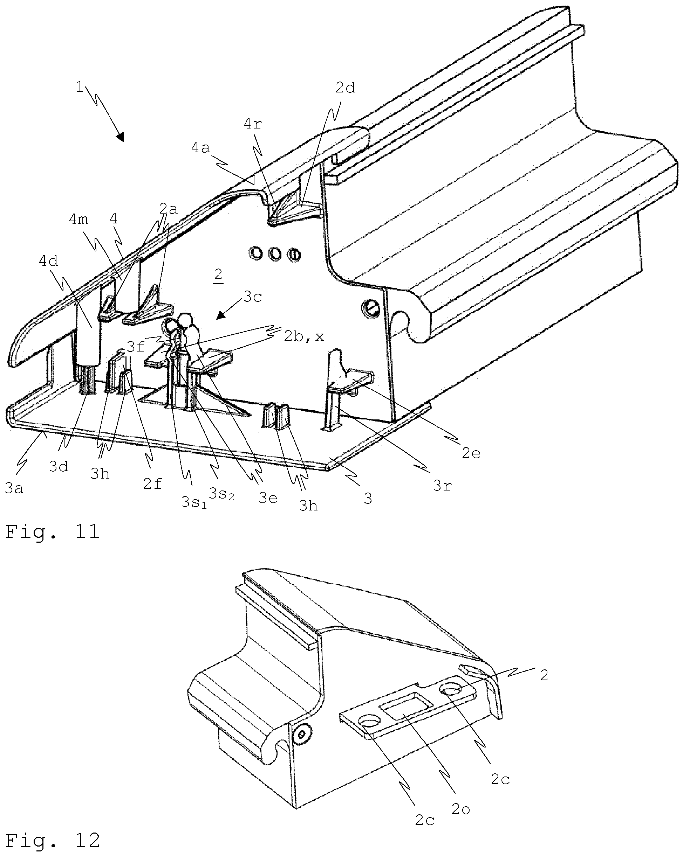

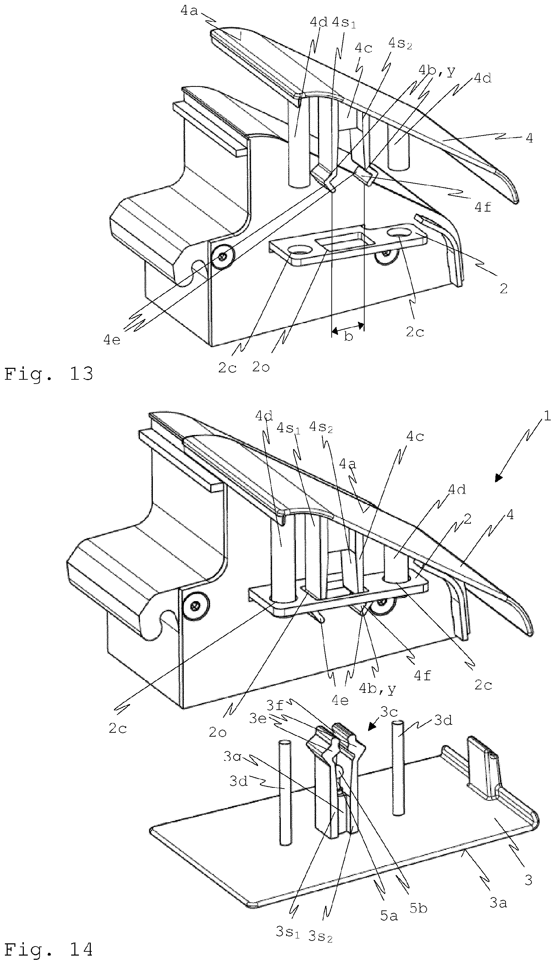

Nachfolgend werden der Vorgang zum Fixieren als auch zum Lösen der Befestigungsvorrichtung 1 anhand der Fig. 3 bis 11 für die erste erfindungsgemäße Ausführungsform und anhand der Fig. 12 bis 18 für die zweite erfindungsgemäße Ausführungsform näher erläutert.

Dabei ist in Fig. 3 ein Verkleidungsträger 2 mit einer Halteaufnahme 2b und einer Halterung 2a zur Montage der Innenraumverkleidungselemente 3,4 dargestellt.

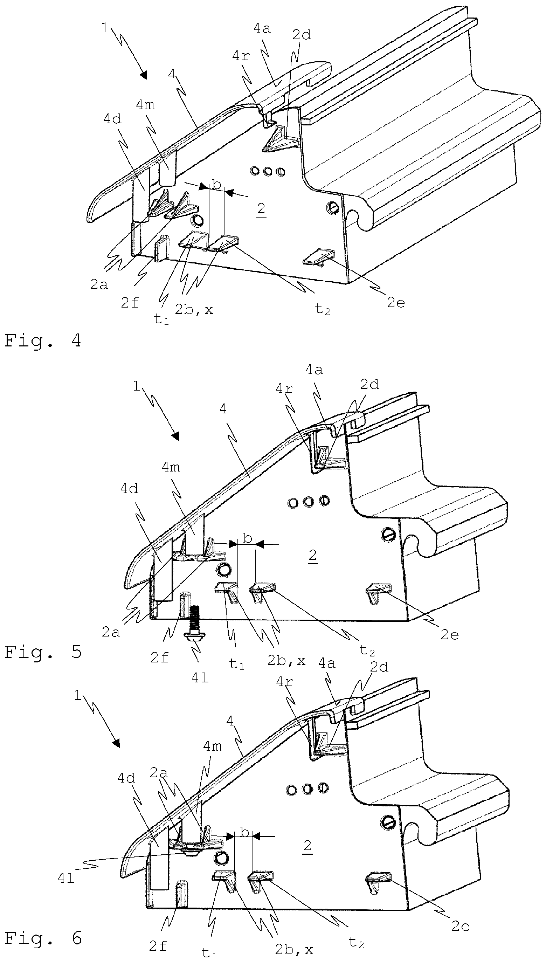

In einem ersten Befestigungsschritt wird über dem Verkleidungsträger 2 das zweite Innenraumverkleidungselement 4 derart positioniert, dass eine Halterung 4m auf der am Verkleidungsträger 2 angeordneten Halterung 2a aufliegt und ein Rasthaken 4r in ein erstes Einrasthakenelement 2d am Verkleidungsträger 2 einrastet, wobei im Anschluss das zweite Innenraumverkleidungselement 4 am Verkleidungsträger 2 mittels eines Montagemittels 41, siehe Fig. 5, befestigt wird.

Im Anschluss werden die Rastabschnitte 3e des ersten Innenraumverkleidungselementes 3 in die Halteaufnahme 2b am Verkleidungsträger 2 eingefädelt. Dazu müssen die Rastabschnitte 3e zunächst zusammengepresst werden, so dass der Abstand der Außenflächen der Rastabschnitte 3e kleiner als die kleinste lichte Breite b der Halteaufnahme 2b, gebildet durch den Zwischenraum zwischen den beiden Trägerelementen t₁,t₂, ist. Nach dem Einfädeln kann die Pressung gelöst werden, wodurch die Rastabschnitte 3e entweder in ihre entspannte Ausgangslage zurückfedern oder aber sich in eine leicht vorgespannte Lage zurückziehen, jedenfalls aber in eine Lage, in welcher der Abstand der Außenflächen der Rastabschnitte 3e größer als die kleinste lichte Breite b der Halteaufnahme 2b ist. Dabei ist zu berücksichtigen, dass vorzugsweise vor dem Einfädeln, spätestens aber während des Einfädelns ein am ersten Innenraumverkleidungselement 3 angeordneter Führungsstab 3d in ein am zweiten Innenraumverkleidungselement 4 angeordnetes Führungselement 4d eingeführt wird.

Somit ist der Abstand der Außenflächen der Rastabschnitte 3e des ersten Innenraumverkleidungselementes 3 größer als die die kleinste lichte Breite b definierende Halteaufnahme 2b am Verkleidungsträger 2.

Erfindungsgemäß ist in das durch das Fixierelement 3c des ersten Innenraumverkleidungselementes 3 gebildete Aufnahmevolumen 3f der Fixierbolzen 5a, bzw. der Fixierkopf 5b, welcher an einem Ende des Fixierbolzens 5a angeordnet ist, einsetzbar, welcher ein Zusammendrücken der Rastabschnitte 3e des Fixierelementes 3c des ersten Innenraumverkleidungselementes 3 auf einen Abstand, welcher ein Ausfädeln des Fixierelementes 3c des ersten Innenraumverkleidungselementes 3 aus der Halteaufnahme 2b ermöglicht, verhindert.

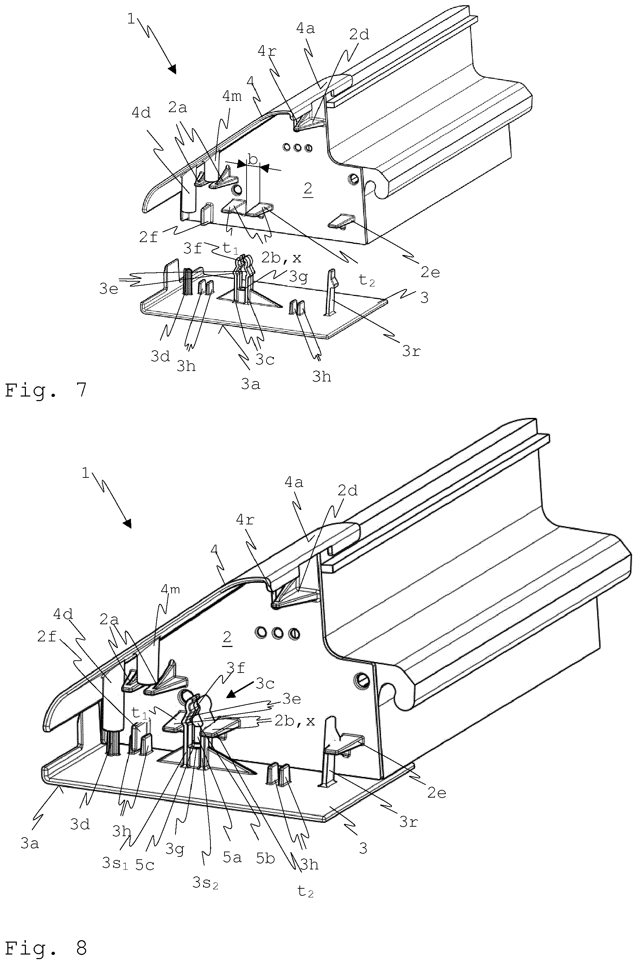

In der in Fig. 8 dargestellten Ausführungsform ist dieser Fixierbolzen 5a zwischen den stabförmigen Abschnitten 3s₁,3s₂ des Fixierelementes 3c des ersten Innenraumverkleidungselementes 3 längsverschiebbar angeordnet, wobei dieser Fixierbolzen 5a an seinem freien Ende gegenüber der Außenkontur 3a des ersten Innenraumverkleidungselementes 3 einen Fixierkopf 5b zur einfacheren und sicheren Handhabung des Fixierbolzens 5a aufweist.

Dieser Fixierkopf 5b wird im Anschluss in das Aufnahmevolumen 3f durch Verschieben entlang einer durchgängigen Längsführung 3g in Fixierrichtung F_{R} eingeführt, wie in Fig. 9 und 10 dargestellt ist.

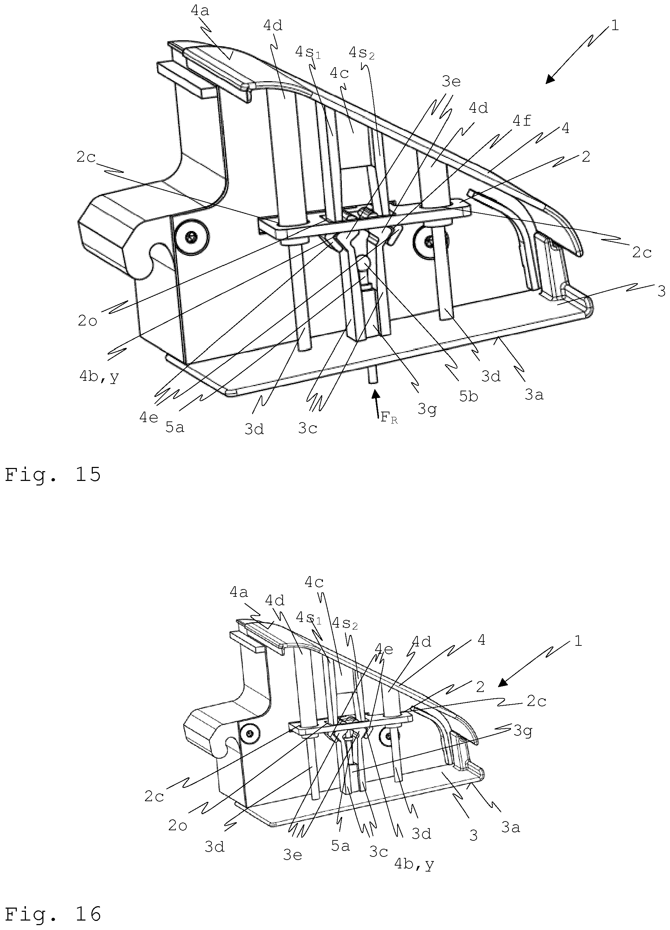

Zur einfacheren Betätigung dieses Fixierbolzens 5a kann dieser in einer erfindungsgemäßen Ausführungsform aus der Außenkontur 3a des ersten Innenraumverkleidungselementes 3, wie in Fig. 15 dargestellt, vor dem Einführen des Fixierkopfes 5b in das Aufnahmevolumen 3f herausragen. Somit wird zum Einführen des Fixierkopfes 5b in das Aufnahmevolumen 3f des ersten Innenraumverkleidungselementes 3 und damit zur Verriegelung des erfindungsgemäßen Befestigungssystems 1 ein über die Außenkontur 3a des ersten Innenraumverkleidungselementes 3 überstehender Abschnitt, siehe Fig. 15, in Fixierrichtung F_{R} in Richtung des zweiten Innenraumverkleidungselementes 4 bis zum Eingreifen des Fixierkopfes 5b in das Aufnahmevolumen 3f verschoben. In dieser Stellung ist der Fixierbolzen 5a von außen ohne zusätzlichem Hilfsmittel nicht zugänglich, wie in Fig. 10 und Fig. 17 dargestellt ist.

Auf die spezielle Art und Weise des Einbringens des Fixierbolzens 5a bzw. des Fixierkopfes 5b in das Aufnahmevolumen 3f kommt es dabei nicht an. Lediglich eine besonders bevorzugte, weil platzsparende Lösung sieht vor den Fixierbolzen 5a längsverschiebbar zwischen den stabförmigen Abschnitten 3s₁,3s₂ des Fixierelementes 3c in einer durchgängigen Längsführung 3g zu positionieren.

Das Lösen der Befestigung ist in Fig. 11 dargestellt. Mit Hilfe eines nicht dargestellten Hilfsmittels, welches vorzugsweise stabförmig ausgebildet ist, wird der Fixierbolzen 5a in Entnahmerichtung ER, die in Fig. 10 dargestellt ist und von der Außenkontur (3a) des ersten Innenraumverkleidungselementes (3) wegführend verläuft und im vorliegenden Ausführungsbeispiel der Fixierrichtung F_{R} entspricht, aus der ersten Position, in welcher der Fixierbolzen 5a bzw. der Fixierkopf 5b zumindest abschnittsweise in dem durch das Fixierelement 3c des ersten Innenraumverkleidungselementes 3 gebildete Aufnahmevolumen 3f angeordnet ist, soweit verschoben, dass der Fixierbolzen 5a bzw. der Fixierkopf 5b aus dem durch das Fixierelement 3c gebildeten Aufnahmevolumen 3f des Fixierelementes (3c) gedrückt wird und sich somit in einer zweiten Position befindet, siehe auch Fig. 20, welche sich auf der zu der Außenkontur (3a) des ersten Innenraumverkleidungselentes (3) gegenüberliegenden Seite des Aufnahmevolumens (3f) befindet bzw. bei Existenz eines zweiten Innenraumverkleidungselementes (4) zwischen Aufnahmevolumen (3f) und dem zweiten Innenraumverkleidungslement (4). Einfacher ausgedrückt ist in der zweiten Position jener Abschnitt des Fixierbolzens 5a, welcher in der ersten Position innerhalb des Aufnahmevolumens angeordnet ist, außerhalb des Aufnahmevolumens 3f angeordnet.

Sowohl in der ersten Position als auch in der zweiten ist der Fixierbolzen 5a von außen ohne zusätzlichem Hilfsmittel nicht zugänglich, da er nicht über die Außenkontur 3a des ersten Innenraumverkleidungselementes (3) übersteht, wie dies in Fig. 10 und Fig. 17 dargestellt ist.

Anschließend wird, wenn sich der Fixierbolzen 5a in der zweiten Position befindet, das Fixierelement 3c aus der am Verkleidungsträger 2 angeordneten Halteaufnahme 2b ausgefädelt, wodurch das erste Innenraumverkleidungselement 3 vom Verkleidungsträger 2 abgenommen werden kann.

Zum Abschluss wird das Montagemittel 41 mit dem das zweite Innenraumverkleidungselement 4 befestigt ist, siehe Fig. 10, gelöst und das zweite Innenraumverkleidungselement 4 vom Verkleidungsträger 2 abgenommen.

In Fig. 12 bis 18 ist eine zweite erfindungsgemäße Ausführungsform dargestellt, bei welcher der Verkleidungsträger 2 eine Rastbasis 2o und zwei Bohrungen 2c zur Montage der Innenraumverkleidungselemente 3,4 aufweist.

Dabei wird in einem ersten Befestigungsschritt über dem Verkleidungsträger 2 das zweite Innenraumverkleidungselement 4 derart positioniert, dass die Führungselemente 4d und das Fixierelement 4c bereits über den zugehörigen Bohrungen 2c und der Rastbasis 2o einbaurichtig angeordnet sind, sodass das Innenraumverkleidungselement 4 am Verkleidungsträger 2 befestigt werden kann, indem die Rastabschnitte 4e des Fixierelementes 4c des zweiten Innenraumverkleidungselementes 4 durch Zusammenpressen dieser in die Rastbasis 2o am Verkleidungsträger 2 eingefädelt werden. Nach dem Einfädeln kann die Pressung gelöst werden, wodurch die Rastabschnitte 4e entweder in ihre entspannte Ausgangslage zurückfedern oder aber in eine leicht vorgespannte Lage.

In weiterer Folge wird das erste Innenraumverkleidungselement 3 in einbaurichtiger Lage auf der dem zweiten Innenraumverkleidungselement 4 gegenüberliegenden Seite des Verkleidungsträgers 2 positioniert und die Rastabschnitte 3e des ersten Verkleidungselementes 3 in die Halteaufnahme 4b des zweiten Innenraumverkleidungselementes 4 eingeführt bzw. darin positioniert. Gleichzeitig werden an den Innenraumverkleidungselementen 3,4 angeordnete Führungsstäbe 3d und Führungselemente 4d durch die Bohrungen 2c ineinander gesteckt.

In gleicher Weise, wie zum ersten Ausführungsbeispiel beschrieben, werden die Rastabschnitte 3e des Fixierelementes 3c des ersten Innenraumverkleidungselementes 3 in die durch die Rastabschnitte 4e des zweiten Innenraumverkleidungselementes 4 gebildete Halteaufnahme 4b bzw. in ein durch das Fixierelement 4c gebildetes Aufnahmevolumen 4f eingefädelt. Dazu müssen die Rastabschnitte 3e zunächst zusammengepresst werden, so dass der maximale Abstand a der Außenflächen der Rastabschnitte 3e kleiner als die kleinste lichte Breite b der Halteaufnahme 4b ist, diese wird durch den Abstand der Rastabschnitte 4e im Endabschnitt gebildet. Nach dem Einfädeln kann die Pressung gelöst werden, wodurch die Rastabschnitte 3e entweder in ihre entspannte Ausgangslage zurückfedern oder aber in eine leicht vorgespannte Lage, jedenfalls aber in eine Lage, in welcher der maximale Abstand a der Außenflächen der Rastabschnitte 3e größer als die kleinste lichte Breite b der Halteaufnahme 4b ist.

Mit anderen Worten ist der maximale Abstand a der Außenflächen der Rastabschnitte 3e des ersten Innenraumverkleidungselementes 3 im verrasteten Zustand größer als die kleinste lichte Breite b der Halteaufnahme 4b des zweiten Innenraumverkleidungselementes 4.

Nach dem Einfädeln der Rastabschnitte 3e des Fixierelementes 3c des ersten Innenraumverkleidungselementes 3 in die Halteaufnahme 4b des zweiten Innenraumverkleidungselementes 4, deren Rastelemente 4c in die am Verkleidungsträger 2 angeordnete Rastbasis 2o eingefädelt sind, wird der im vorliegenden Fall in einer durchgängigen Längsführung 3g, welche zwischen den beiden stabförmigen Abschnitten 3s₁,3s₂ des Fixierelementes 3c angeordnet ist, verschiebbar angeordnete Fixierbolzen 5a in das Aufnahmevolumen 3f durch Verschieben in Fixierrichtung F_{R} eingeführt, wie in Fig. 15 und 17 dargestellt ist.

Erfindungsgemäß ist in das durch das Fixierelement 3c des ersten Innenraumverkleidungselementes 3 gebildete Aufnahmevolumen 3f der Fixierbolzen 5a, vorzugsweise der Fixierkopf 5b, welcher an einem Ende des Fixierbolzens 5a angeordnet ist, einsetzbar, welcher obig beschriebene Funktion aufweist.

Das Lösen der zweiten erfindungsgemäßen Ausführungsform erfolgt prinzipiell wie bei der ersten erfindungsgemäßen Ausführungsform, wobei, wenn sich der Fixierbolzen 5a, wie in Fig. 18 dargestellt, in der zweiten Position befindet, das in dem Aufnahmevolumen 4f positionierte Fixierelement 3c des ersten Innenraumverkleidungselementes 3 aus der Halteaufnahme 4b des zweiten Innenraumverkleidungselementes 4 herausgefädelt wird. Dazu ist im zusammengedrückten Zustand der Rastabschnitte 3e der Abstand der Außenflächen der Rastabschnitte 3e kleiner als die kleinste lichte Breite b der Halteaufnahme 4b.

Dabei wird daraufhin hingewiesen, dass vorteilhafterweise der Fixierbolzen 5a bei beiden erfindungsgemäßen Ausführungsformen einen Anschlag 5c aufweist, durch welchen ein eventuelles Herausgleiten des Fixierbolzens 5a aus der zweiten Position in den innenliegenden Bereich des Befestigungssystems 1 vermieden wird. Darüber hinaus wird darauf aufmerksam gemacht, dass der Fixierbolzen 5a vor dem Einbau des ersten Innenraumverkleidungselementes 3 bereits in die durchgängige Längsführung 3g eingesetzt ist, wobei der Fixierkopf 5b in einbaurichtiger Lage in Richtung des zweiten Innenraumverkleidungselementes 4 zeigt.

Im Anschluss werden die Rastabschnitte 4e des Fixierelementes 4c des zweiten Innenraumverkleidungselementes 4 zusammengedrückt und das Fixierelementes 4c wird aus der Halteaufnahme 2b ausgefädelt.

Es wird abschließend angemerkt, dass verschiedene Ausführungsformen des Befestigungssystems 1 inklusive der zugehörigen Komponenten, wie beispielsweise des Verkleidungsträgers 2 mit einer beliebigen Anzahl an Halteaufnahmen 2b, Bohrungen 2c und Rastbasen 2o zur Aufnahme der Innenraumverkleidungselemente 3,4 mit beliebigen Formen, ohne erfinderischem Zutun technisch umsetzbar sind.

### BEZUGSZEICHENLISTE

- 1: Befestigungssystem;
- 2: Verkleidungsträger;
- 2a: Halterung am Verkleidungsträger 2;
- 2b: Halteaufnahme am Verkleidungsträger 2;
- 2c: Bohrung im Verkleidungsträger 2;
- 2d: erstes Einrasthakenelement am Verkleidungsträger 2;
- 2e: zweites Einrasthakenelement am Verkleidungsträger 2;
- 2f: Führungsnase am Verkleidungsträger 2;
- 2o: Rastbasis am Verkleidungsträger 2;
- 3: erstes Innenraumverkleidungselement;
- 3a: Außenkontur des ersten Innenraumverkleidungselementes 3;
- 3c: Fixierelement des ersten Innenraumverkleidungselementes 3;
- 3d: Führungsstab des ersten Innenraumverkleidungselementes 3;
- 3e: Rastabschnitte des ersten Innenraumverkleidungselementes 3;
- 3f: Aufnahmevolumen, gebildet durch die stabförmigen Abschnitte 3s₁,3s₁ des Fixierelementes 3c;
- 3g: durchgängige Längsführung im ersten Innenraumverkleidungselement 3;
- 3h: Führungsnasen des ersten Innenraumverkleidungselementes 3;
- 3r: Rasthaken des ersten Innenraumverkleidungselementes 3;
- 3s₁: erster stabförmiger Abschnitt des Fixierelementes 3c;
- 3s₂: zweiter stabförmiger Abschnitt des Fixierelementes 3c;
- 4: zweites Innenraumverkleidungselement;
- 4a: Außenkontur des zweiten Innenraumverkleidungselementes 4;
- 4b: Halteaufnahme am zweiten Innenraumverkleidungselement 4;
- 4c: Fixierelement des zweiten Innenraumverkleidungselementes 4;
- 4d: Führungselement des zweiten Innenraumverkleidungselementes 4;
- 4e: Rastabschnitte des zweiten Innenraumverkleidungselementes 4;
- 4f: Aufnahmevolumen, gebildet durch die stabförmigen Abschnitte 4s₁,4s₂ des Fixierelementes 4c;
- 4l: Montagemittel für das zweite Innenraumverkleidungselement 4;
- 4m: Halterung des zweiten Innenraumverkleidungselementes 4;
- 4r: Rasthaken des zweiten Innenraumverkleidungselementes 4;
- 4s₁: erster stabförmiger Abschnitt des Fixierelementes 4c;
- 4s₂: zweiter stabförmiger Abschnitt des Fixierelementes 4c;
- 5a: Fixierbolzen;
- 5b: Fixierkopf;
- 5c: Anschlag des Fixierbolzens 5a;
- a: maximaler Abstand der zumindest einen Außenfläche des zumindest einen Rastabschnittes 3e,4e;
- b: kleinste lichte Breite einer Halteaufnahme 2b,4b;
- t₁: erstes Trägerelement am Verkleidungsträger 2;
- t₂: zweites Trägerelement am Verkleidungsträger 2;
- x,y: Halteelement;
- E_{R}: Entnahmerichtung; und
- F_{R}: Fixierrichtung.

## Patentansprüche

1. System zur Befestigung eines ersten (3) oder eines ersten und eines zweiten Innenraumverkleidungselementes (3,4) an einem in einem Innenraumbereich, vorzugsweise eines Schienenfahrzeuges, angeordneten Verkleidungsträger (2), das System umfassend:
- ein erstes Innenraumverkleidungselement (3) mit einem Fixierelement (3c), welches Fixierelement (3c) zwei Rastabschnitte (3e) mit jeweils einer Außenfläche aufweist, wobei das Fixierelement (3c) zwei stabförmige Abschnitte (3s₁,3s₂) umfasst, die zwischen sich ein Aufnahmevolumen (3f) ausbilden und jeder stabförmige Abschnitt (3s₁,3s₂) mit einem der Rastabschnitte (3e) versehen ist,
- mindestens ein Halteelement (x,y) mit einer eine kleinste lichte Breite (b) definierenden Halteaufnahme (2b,4b) zur Verrastung des Fixierelementes (3c) mittels dessen Rastabschnitten (3e),
- einen Fixierbolzen (5a) mit einem Fixierkopf (5b), welcher Fixierkopf (5b) entlang einer Fixierrichtung (F_{R}) in eine erste Position und entlang einer Entnahmerichtung (E_{R}) von der ersten Position in eine zweite Position bewegbar ist,
- wobei in der ersten Position der Fixierkopf (5b) im Aufnahmevolumen (3f) aufgenommen und verrastet ist, wodurch ein Zusammendrücken der Außenflächen der beiden Rastabschnitte (3e) auf einen Abstand, der kleiner ist als die kleinste lichte Breite (b) und das Entfernen des Fixierelementes (3c) aus der Halteaufnahme (2b,4b) ermöglicht, verhindert wird,
- und in der zweiten Position der Fixierkopf (5b) außerhalb des Aufnahmevolumens (3f) angeordnet ist, wodurch die Rastabschnitte (3e) zusammendrückbar sind, sodass der Abstand der Außenflächen der Rastabschnitte (3e) kleiner ist als die kleinste lichte Breite (b),um ein Ausfädeln des Fixierelementes (3c) aus der Halteaufnahme (2b,4b) zu ermöglichen,
**dadurch gekennzeichnet, dass**
die Entnahmerichtung (E_{R}) der Fixierrichtung (F_{R}) entspricht.

2. System nach Anspruch 1, **dadurch gekennzeichnet, dass** das erste Innenraumverkleidungselement (3) eine durchgängige Längsführung (3g) aufweist, welche die Außenkontur (3a) des ersten Innenraumverkleidungselementes (3) mit dem Aufnahmevolumen (3f) verbindet und der Fixierbolzen (5a) in der Längsführung (3g) und dem Aufnahmevolumen (3f) längsverschiebbar angeordnet und von der Außenkontur (3a) aus zugänglich ist.

3. System nach Anspruch 1 oder 2, **dadurch gekennzeichnet, dass** der Fixierkopf (5b) entlang der Entnahmerichtung (E_{R}) aus dem Aufnahmevolumen (3f) drückbar ist, um von der ersten Position in die zweite Position befördert zu werden.

4. System nach einem der Ansprüche 1 bis 3, **dadurch gekennzeichnet, dass** das erste Innenraumverkleidungselement (3) das Fixierelement (3c) ausbildet.

5. System nach einem der Ansprüche 1 bis 4, **dadurch gekennzeichnet, dass** sich der Fixierkopf (5b) in der zweiten Position zwischen dem Aufnahmevolumen (3f) und dem zweiten Innenraumverkleidungselement (4) befindet.

6. System einem der Ansprüche 1 bis 5, **dadurch gekennzeichnet, dass** sich der Fixierkopf (5b) in der zweiten Position auf der zu einer Außenkontur (3a) des ersten Innenraumverkleidungselementes (3) gegenüberliegenden Seite des Aufnahmevolumens (3f) befindet.

7. System nach einem der Ansprüche 1 bis 6, **dadurch gekennzeichnet, dass** das Fixierelement (3c,4c) zumindest im Bereich der Rastabschnitte (3e,4e) elastisch ausgebildet ist.

8. System nach einem der Ansprüche 1 bis 7, **dadurch gekennzeichnet, dass** der in das Aufnahmevolumen (3f) einführbare Fixierbolzen (5a) in der ersten Position und/oder der zweiten Position nicht über die Außenkontur (3a) des ersten Innenraumverkleidungselementes (3) hinausragt.

9. System nach einem der Ansprüche 1 bis 8, **dadurch gekennzeichnet, dass** die Rastabschnitte (3e,4e) hakenförmig ausgebildet sind.

10. System nach einem der Ansprüche 1 bis 8, **dadurch gekennzeichnet, dass** die Rastabschnitte (3e,4e) halbkreisförmig ausgebildet sind.

11. System nach einem der Ansprüche 1 bis 10, **dadurch gekennzeichnet, dass** ein maximaler Abstand (a) der Außenflächen der beiden Rastabschnitte (3e) im verrasteten Zustand größer
als die kleinste lichte Breite (b) der Halteaufnahme (2b,4b) ist.

12. System nach einem der Ansprüche 1 bis 11, **dadurch gekennzeichnet, dass** das Halteelement (x) am Verkleidungsträger (2) angeordnet ist.

13. System nach Anspruch 12, **dadurch gekennzeichnet, dass** das Halteelement (x) zwei im Wesentlichen in einem Abstand zueinander verlaufende Trägerelemente (t₁,t₂) umfasst und die die kleinste lichte Breite (b) definierende Halteaufnahme (2b) durch den Zwischenraum zwischen den beiden Trägerelementen (t₁,t₂) gebildet ist.

14. System nach einem der Ansprüche 1 bis 11, **dadurch gekennzeichnet, dass** das Halteelement (y) an dem zweiten Innenraumverkleidungselement (4) angeordnet ist.

15. System nach Anspruch 14, **dadurch gekennzeichnet, dass** das zweite Innenraumverkleidungselement (4) ein weiteres Fixierelement (4c) mit zwei Rastabschnitten (4e) aufweist, welche zwischen sich die Halteaufnahme (4b) definieren.

16. System nach Anspruch 15, **dadurch gekennzeichnet, dass** die beiden Rastabschnitte
(4e) des zweiten
Innenraumverkleidungselementes (4) in einer am Verkleidungsträger (2) angeordneten Rastbasis (2o) verrastbar ist.

17. Verfahren zum Lösen eines ein Fixierelement (3c) umfassenden ersten Innenraumverkleidungselements (3) aus einem befestigten Zustand, wobei das erste Innenraumverkleidungselement (3) durch Verrastung des Fixierelements (3c) mit einer Halteaufnahme (2b,4b) eines Halteelements (x,y) an einem in einem Innenraumbereich, vorzugsweise in einem Innenraumbereich eines Schienenfahrzeuges, angeordneten Verkleidungsträger (2) befestigt ist, indem ein Fixierbolzen (5a) entlang einer Fixierrichtung (F_{R}) in das Fixierelement (3c) eingeschoben wurde, wobei das Lösen der Verrastung im befestigten Zustand mittels des sich in einer ersten Position befindlichen Fixierbolzens (5a) verhindert wird,
**dadurch gekennzeichnet, dass**
zum Lösen des ersten Innenraumverkleidungselements (3) folgender Verfahrensschritt durchgeführt wird:
- Verschieben des Fixierbolzens (5a) entlang einer der Fixierrichtung (F_{R}) entsprechenden Entnahmerichtung (E_{R}) bis die Verrastung des ersten Innenraumverkleidungselements (3) in einer zweiten Position des Fixierbolzens (5a) gelöst werden kann.

18. Verfahren nach Anspruch 17, **dadurch gekennzeichnet, dass** das Halteelement (x) am Verkleidungsträger (2) angeordnet ist und dass das erste Innenraumverkleidungselement (3) vom Verkleidungsträger (2) gelöst werden kann, wenn der Fixierbolzen (5a) in die zweite Position verschoben wird.

19. Verfahren nach Anspruch 17, **dadurch gekennzeichnet, dass** im befestigten Zustand ein zweites Innenraumverkleidungselement (4) mit dem Verkleidungsträger (2) verrastet ist, wobei das Halteelement (y) am zweiten Innenraumverkleidungselement (4) angeordnet ist und das erste Innenraumverkleidungselement (3) mit dem zweiten Innenraumverkleidungselement (4) verrastet ist, wobei der Fixierbolzen (5a) in der ersten Position das Lösen beider Verrastungen verhindert, und dass sowohl das erste Innenraumverkleidungselement (3) als auch das zweite Innenraumverkleidungselement (4) vom Verkleidungsträger (2) gelöst werden können, wenn der Fixierbolzen (5a) in die zweite Position verschoben wird.

## Claims

1. System for fastening a first (3) or a first and a second interior cladding element (3, 4) on a cladding carrier (2) arranged in an interior region, preferably of a rail vehicle, the system comprising:
- a first interior cladding element (3) with a fixing element (3c), which fixing element (3c) has two latching sections (3e) each having an outer surface, wherein the fixing element (3c) comprises two rod-shaped sections (3s₁, 3s₂), which between them form a receiving volume (3f) and each rod-shaped section (3s₁, 3s₂) is provided with one of the latching sections (3e),
- at least one retaining element (x, y) having a retaining receptacle (2b, 4b) defining a smallest clear width (b) for engaging the fixing element (3c) by means of the latching sections (3e) thereof,
- a fixing bolt (5a) with a fixing head (5b) which fixing head (5b) is movable along a fixing direction (F_{R}) into a first position and along a removal direction (E_{R}) from the first position into a second position,
- wherein in the first position the fixing head (5b) is received and engaged in the receiving volume (3f) whereby a compression of the outer surfaces of the two latching sections (3e) to a distance which is smaller than the smallest clear width (b), and enables the removal of the fixing element (3c) from the retaining receptacle (2b, 4b), is prevented,
- and in the second position the fixing head (5b) is arranged outside the receiving volume (3f) wherein the latching sections (3e) can be compressed so that the distance of the outer surfaces of the latching sections (3e) is smaller than the smallest clear width (b) to enable the fixing element (3c) to be removed from the retaining receptacle (2b, 4b), **characterized in that** the removal direction (E_{R}) corresponds to the fixing direction (F_{R}).

2. The system according to claim 1, **characterized in that** the first inner cladding element (3) has a continuous longitudinal guide (3g) which connects the outer contour (3a) of the first interior cladding element (3) to the receiving volume (3f) and the fixing bolt (5a) is arranged longitudinally displaceably in the longitudinal guide (3g) and the receiving volume (3f) and is accessible from the outer contour (3a).

3. The system according to claim 1 or 2, **characterized in that** the fixing head (5b) can be pressed along the removal direction (E_{R}) from the receiving volume (3f) in order to be conveyed from the first position into the second position.

4. The system according to one of claims 1 to 3, **characterized in that** the first inner cladding element (3) forms the fixing element (3c).

5. The system according to one of claims 1 to 4, **characterized in that** the fixing head (5b) is located in the second position between the receiving volume (3f) and the second inner cladding element (4).

6. The system according to one of claims 1 to 5, **characterized in that** the fixing head (5b) is located in the second position on the opposite side of the receiving volume (3f) with respect to an outer contour (3a) of the first inner cladding element (3).

7. The system according to one of claims 1 to 6, **characterized in that** the fixing element (3c, 4c) is configured to be elastic at least in the region of the latching sections (3e, 4e).

8. The system according to one of claims 1 to 7, **characterized in that** the fixing bolt (5a), which can be inserted into the receiving volume (3f), in the first position and/or the second position does not project beyond the outer contour (3a) of the first inner cladding element (3).

9. The system according to one of claims 1 to 8, **characterized in that** the latching sections (3e, 4e) are configured to be hook-shaped.

10. The system according to one of claims 1 to 8, **characterized in that** the latching sections (3e, 4e) are configured to be semi-circular.

11. The system according to one of claims 1 to 10, **characterized in that** a maximum distance (a) of the outer surfaces of the two latching sections (3e) in the engaged state is greater than the smallest clear width (b) of the retaining receptacle (2b, 4b).

12. The system according to one of claims 1 to 11, **characterized in that** the retaining element (x) is arranged on the cladding carrier (2).

13. The system according to claim 12, **characterized in that** the retaining element (x) comprises two carrier elements (t1, t2) running substantially at a distance from one another and the retaining receptacle (2b) defining the smallest clear width (b) is formed by the intermediate space between the two carrier elements (t1, t2).

14. The system according to one of claims 1 to 11, **characterized in that** the retaining element (y) is arranged on the second inner cladding element (4).

15. The system according to claim 14, **characterized in that** the second inner cladding element (4) has a further fixing element (4c) with two latching sections (4e) which between them define the retaining receptacle (4b).

16. The system according to claim 15, **characterized in that** the two latching sections (4e) of the second inner cladding element (4) can be engaged in a latching base (2o) arranged on the cladding carrier (2).

17. Method for releasing a first inner cladding element (3) comprising a fixing element (3c) from a fastened state, wherein the first inner cladding element (3) is fastened by engaging the fixing element (3c) with a retaining receptacle (2b, 4b) of a retaining element (x, y) on a cladding carrier (2) arranged in an interior region, preferably in an interior region of a rail vehicle, by having pushed a fixing bolt (5a) into the fixing element (3c) along a fixing direction (F_{R}), wherein the release of the engagement in the fastened state is prevented by means of a fixing bolt (5a) located in a first position, **characterized in that** the following process step is carried out to release the first inner cladding element (3):
- displacement of the fixing bolt (5a) along a removal direction (E_{R}) corresponding to the fixing direction (F_{R}) until the engagement of the first inner cladding element (3) in a second position of the fixing bolt (5a) can be released.

18. The method according to claim 17, **characterized in that** the retaining element (x) is arranged on the cladding carrier (2) and that the first inner cladding element (3) can be released from the cladding carrier (2) when the fixing bolt (5a) is pushed into the second position.

19. The method according to claim 17, **characterized in that** in the fastened state a second inner cladding element (4) is engaged with the cladding carrier (2), wherein the retaining element (y) is arranged on the second inner cladding element (4) and the first inner cladding element (3) is engaged with the second inner cladding element (4), wherein the fixing bolt (5a) in the first position prevents the release of both engagements and that both the first inner cladding element (3) and the second inner cladding element (4) can be released from the cladding carrier (2) when the fixing bolt (5a) is pushed into the second position.

## Revendications

1. Système pour la fixation d'un premier élément d'habillage intérieur (3) ou d'un premier et d'un deuxième élément d'habillage intérieur (3,4) sur un support d'habillage (2) disposé dans un espace intérieur, de préférence d'un véhicule ferroviaire, lequel système comprend :
- un premier élément d'habillage intérieur (3) avec un élément de fixation (3c), lequel élément de fixation (3c) présente deux sections d'enclenchement (3e) avec chacune une surface extérieure, l'élément de fixation (3c) comprenant deux parties en forme de barre (3s₁, 3s₂) qui forment entre elles un volume de logement (3f) et chaque partie en forme de barre (3s₁, 3s₂) étant pourvue de l'une des sections d'enclenchement (3e),
- au moins un élément de maintien (x, y) avec un logement de maintien (2b, 4b) définissant une plus petite largeur ouverte (b) pour l'enclenchement de l'élément de fixation (3c) au moyen de ses sections d'enclenchement (3e),
- un boulon de fixation (5a) avec une tête de fixation (5b), laquelle tête de fixation (5b) peut se déplacer dans un sens de fixation (F_{R}) dans une première position et dans un sens de retrait (E_{R}) de la première position à une deuxième position,
- la tête de fixation (5b) étant logée et enclenchée dans le volume de logement (3f) dans la première position, ce qui empêche la compression des surfaces extérieures des deux sections d'enclenchement (3e) jusqu'à une distance inférieure à la plus petite largeur ouverte (b) qui permettrait le retrait de l'élément de fixation (3c) hors du logement de maintien (2b, 4b),
- et la tête de fixation (5b) étant disposée en dehors du volume de logement (3f) dans la deuxième position, de sorte que les sections d'enclenchement (3e) peuvent être comprimées et que la distance entre les surfaces extérieures des sections d'enclenchement (3e) est ainsi plus petite que la plus petite largeur ouverte (b) pour permettre l'extraction de l'élément de fixation (3c) hors du logement de maintien (2b, 4b),
**caractérisé en ce que** le sens de retrait (E_{R}) correspond au sens de fixation (F_{R}).

2. Système selon la revendication 1, **caractérisé en ce que** le premier élément d'habillage intérieur (3) présente un guide longitudinal (3g) continu qui relie le contour extérieur (3a) du premier élément d'habillage intérieur (3) au volume de logement (3f) et le boulon de fixation (5a) est disposé dans le guide longitudinal (3g) et le volume de logement (3f) avec possibilité de translation longitudinale et accessible à partir du contour extérieur (3 a).

3. Système selon la revendication 1 ou 2, **caractérisé en ce que** la tête de fixation (5b) peut être expulsée du volume de logement (3f) dans le sens de retrait (E_{R}) pour être amenée de la première position à la deuxième position.

4. Système selon l'une des revendications 1 à 3, **caractérisé en ce que** le premier élément d'habillage intérieur (3) forme l'élément de fixation (3c).

5. Système selon l'une des revendications 1 à 4, **caractérisé en ce que** la tête de fixation (5b) se trouve entre le volume de logement (3f) et le deuxième élément d'habillage intérieur (4) dans la deuxième position.

6. Système selon l'une des revendications 1 à 5, **caractérisé en ce que** la tête de fixation (5b) se trouve sur le côté du volume de logement (3f) faisant face à un contour extérieur (3a) du premier élément d'habillage intérieur (3) dans la deuxième position.

7. Système selon l'une des revendications 1 à 6, **caractérisé en ce que** l'élément de fixation (3c, 4c) est élastique au moins au niveau des sections d'enclenchement (3e, 4e).

8. Système selon l'une des revendications 1 à 7, **caractérisé en ce que** le boulon de fixation (5a) pouvant être introduit dans le volume de logement (3f) ne dépasse pas du contour extérieur (3a) du premier élément d'habillage intérieur (3) dans la première position et/ou dans la deuxième position.

9. Système selon l'une des revendications 1 à 8, **caractérisé en ce que** les sections d'enclenchement (3e, 4e) sont en forme de crochet.

10. Système selon l'une des revendications 1 à 8, **caractérisé en ce que** les sections d'enclenchement (3e, 4e) sont en forme de demi-cercle.

11. Système selon l'une des revendications 1 à 10, **caractérisé en ce qu'**une distance maximale (a) entre les surfaces extérieures des deux sections d'enclenchement (3e) est plus grande dans l'état enclenché que la plus petite largeur ouverte (b) du logement de maintien (2b, 4b).

12. Système selon l'une des revendications 1 à 11, **caractérisé en ce que** l'élément de maintien (x) est disposé sur le support d'habillage (2).

13. Système selon la revendication 12, **caractérisé en ce que** l'élément de maintien (x) comprend deux éléments de support (t₁, t₂) qui s'étendent pour l'essentiel à distance l'un de l'autre et le logement de maintien (2b) définissant la plus petite largeur ouverte (b) est formé par l'intervalle entre les deux éléments de support (t₁, t₂).

14. Système selon l'une des revendications 1 à 11, **caractérisé en ce que** l'élément de maintien (y) est disposé sur le deuxième élément d'habillage intérieur (4).

15. Système selon la revendication 14, **caractérisé en ce que** le deuxième élément d'habillage intérieur (4) présente un autre élément de fixation (4c) avec deux sections d'enclenchement (4e) qui définissent entre elles le logement de maintien (4b).

16. Système selon la revendication 15, **caractérisé en ce que** les deux sections d'enclenchement (4e) du deuxième élément d'habillage intérieur (4) peuvent être enclenchées dans une base d'enclenchement (2o) disposée sur le support d'habillage (2).

17. Procédé pour défaire un premier élément d'habillage intérieur (3) comprenant un élément de fixation (3c) d'un état fixé, dans lequel le premier élément d'habillage intérieur (3) est fixé par enclenchement de l'élément de fixation (3c) avec un logement de maintien (2b, 4b) d'un élément de maintien (x, y) sur un support d'habillage (2) disposé dans un espace intérieur, de préférence dans l'intérieur d'un véhicule ferroviaire, par le fait qu'un boulon de fixation (5a) a été inséré dans un sens de fixation (F_{R}) dans l'élément de fixation (3c), l'enclenchement étant empêché de se défaire dans l'état fixé au moyen du boulon de fixation (5a) qui se trouve dans une première position, **caractérisé en ce que** l'étape de procédé suivante est exécutée pour défaire le premier élément d'habillage intérieur (3) :
- translation du boulon de fixation (5a) le long d'un sens de retrait (E_{R}) correspondant au sens de fixation (F_{R}) jusqu'à ce que l'enclenchement du premier élément d'habillage intérieur (3) puisse être défait dans une deuxième position du boulon de fixation (5a).

18. Procédé selon la revendication 17, **caractérisé en ce que** l'élément de maintien (x) est disposé sur le support d'habillage (2) et **en ce que** le premier élément d'habillage intérieur (3) peut être détaché du support d'habillage (2) quand le boulon de fixation (5a) est déplacé dans la deuxième position.

19. Procédé selon la revendication 17, **caractérisé en ce que** dans l'état fixé, un deuxième élément d'habillage intérieur (4) est enclenché avec le support d'habillage (2), l'élément de maintien (y) étant disposé sur le deuxième élément d'habillage intérieur (4) et le premier élément d'habillage intérieur (3) étant enclenché avec le deuxième élément d'habillage intérieur (4), le boulon de fixation (5a) empêchant les deux enclenchements de se défaire dans la première position, et **en ce que** le premier élément d'habillage intérieur (3) et le deuxième élément d'habillage intérieur (4) peuvent être détachés du support d'habillage (2) quand le boulon de fixation (5a) est déplacé dans la deuxième position.
